(19) Europäisches Patentamt
European Patent Office
Office européen des brevets

(11) **EP 3 431 973 A1**

(12) **DEMANDE DE BREVET EUROPEEN**

(43) Date de publication:
**23.01.2019 Bulletin 2019/04**

(51) Int Cl.:
***G01N 27/04*** *(2006.01)*

(21) Numéro de dépôt: **18182608.2**

(22) Date de dépôt: **10.07.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **17.07.2017 FR 1756735**

(71) Demandeur: **Commissariat à l'Energie Atomique et aux Energies Alternatives 75015 Paris (FR)**

(72) Inventeurs:
• **FAUVEAU, Aurélie**
  **73490 LA RAVOIRE (FR)**
• **MARTEL, Benoît**
  **73200 GILLY SUR ISERE (FR)**
• **VEIRMAN, Jordi**
  **73290 LA MOTTE-SERVOLEX (FR)**

(74) Mandataire: **Cabinet Camus Lebkiri 25 rue de Maubeuge 75009 Paris (FR)**

(54) **PROCÉDÉ DE DÉTERMINATION DES CONCENTRATIONS EN IMPURETÉS DOPANTES MINORITAIRES ET MAJORITAIRES**

(57) L'invention concerne un procédé de détermination des concentrations en impuretés dopantes majoritaires et minoritaires dans un échantillon de matériau semi-conducteur compensé en impuretés dopantes. Ce procédé comprend les étapes suivantes :
- mesurer des valeurs de résistivité électrique ($\rho_M$, $\rho_B$) de l'échantillon à une première température ($T_M$) et à une deuxième température ($T_B$), distincte de la première température, les première et deuxième températures ($T_M$, $T_B$) appartenant à une plage de températures (P3) correspondant à un régime de gel des porteurs de charge ;
- déterminer un facteur pré-exponentiel d'une loi d'Arrhenius exprimant la résistivité électrique dans le régime de gel des porteurs de charge, à partir des valeurs de résistivité électrique ($\rho_M$, $\rho_B$) mesurées aux première et deuxième températures (TM, TB) ;
- déterminer un degré de compensation du matériau semi-conducteur à partir du facteur pré-exponentiel ;
- déterminer les concentrations en impuretés dopantes majoritaires et minoritaires à partir du degré de compensation et d'une valeur de référence de la résistivité électrique de l'échantillon.

Fig. 1

**Description**

**DOMAINE TECHNIQUE**

La présente invention est relative la détermination des concentrations en impuretés dopantes majoritaires et minoritaires dans un matériau semi-conducteur compensé, et plus particulièrement dans un échantillon de silicium métallurgique destiné à l'industrie photovoltaïque.

**ÉTAT DE LA TECHNIQUE**

Le silicium métallurgique purifié (« Upgraded Metallurgical Grade Silicon » en anglais, UMG-Si) est couramment utilisé dans l'industrie photovoltaïque. Il est préféré au silicium de qualité électronique (« Electronic Grade Silicon », EG-Si) car les procédés pour son élaboration sont moins longs et requièrent moins d'énergie. Cela permet de réduire le coût de fabrication des cellules photovoltaïques.

Le silicium métallurgique contient par contre plus d'impuretés que le silicium de qualité électronique. Les concentrations en dopants, en bore et en phosphore notamment, sont particulièrement élevées (plusieurs ppma). Les atomes de bore constituent des impuretés dopantes de type accepteur, tandis que les atomes de phosphore constituent des impuretés dopantes de type donneur. Puisque le silicium métallurgique contient les deux types d'impuretés dopantes, il est considéré comme compensé en impuretés dopantes.

Lorsque la concentration des impuretés dopantes de type accepteur est supérieure à la concentration des impuretés dopantes de type donneur, les impuretés dopantes de type accepteur sont qualifiées de « majoritaires » et les impuretés dopantes de type donneur sont qualifiées de « minoritaires ». Le silicium possède alors une conductivité dite de type p et les porteurs de charge majoritaires sont des trous.

Inversement, lorsque la concentration des impuretés dopantes de type donneur est supérieure à la concentration des impuretés dopantes de type accepteur, les impuretés dopantes de type donneur sont qualifiées de « majoritaires » et les impuretés dopantes de type accepteur sont qualifiées de « minoritaires ». Le silicium possède alors une conductivité dite de type n et les porteurs de charge majoritaires sont des électrons.

La fabrication de cellules photovoltaïques à partir de plaquettes en UMG-Si nécessite un contrôle rigoureux des concentrations en dopants. Les concentrations en impuretés dopantes de type accepteur ($N_A$) et de type donneur ($N_D$) influent sur les propriétés électriques des cellules, comme le rendement de conversion. Il paraît donc important de connaître les concentrations en impuretés dopantes au sein du silicium, notamment pour déterminer si des étapes additionnelles de purification sont nécessaires. Il est également utile de connaître les concentrations en impuretés dopantes au sein de la charge de silicium utilisée pour fabriquer un lingot de silicium. Ces informations permettent ensuite d'optimiser les procédés de fabrication des cellules photovoltaïques.

Les concentrations en dopants d'un échantillon de silicium sont classiquement déterminées par spectrométrie de masse à décharge luminescente (« Glow Discharge Mass Spectrometry», GDMS) ou par spectrométrie de masse à plasma à couplage inductif (« Inductively Coupled Plasma Mass Spectrometry », ICPMS). Toutefois, ces techniques d'analyses chimiques sont lentes et manquent de précision pour les échantillons dont les teneurs en dopants sont faibles.

La demande de brevet FR3005740 décrit un procédé de détermination des concentrations en trois dopants, dont un de type accepteur et un de type donneur, dans un échantillon de silicium métallurgique. Ce procédé est basé sur la résolution de trois équations à trois inconnues. Une première équation est obtenue en mesurant la concentration en porteurs de charge libres p(T) de l'échantillon à des températures cryogéniques, puis en confrontant les mesures à un modèle mathématique adapté à ces températures. Une deuxième équation est obtenue en mesurant la mobilité des porteurs de charge majoritaires et en la comparant à son expression mathématique.

Une troisième équation entre les concentrations en dopants est établie connaissant l'énergie d'activation du dopant majoritaire le moins profond dans la bande interdite du silicium.

Par ailleurs, la demande de brevet FR3031185 décrit un procédé pour déterminer la concentration des impuretés dopantes minoritaires introduites par contamination dans un échantillon de silicium initialement non-compensé (i.e. comprenant uniquement des impuretés dopantes de type accepteur ou donneur). Ce procédé comprend une étape de mesure de la concentration en porteurs de charge libres p(T) dans une plage de températures correspondant au régime de gel des porteurs de charge, puis une étape de détection de la température à laquelle on observe un changement de pente de la courbe ln(p(T))=f(1000/T). Enfin, la concentration en impuretés dopantes minoritaires est déterminée à partir de la température du changement de pente.

La solution retenue dans ces deux procédés pour mesurer la concentration en porteurs de charge libres p(T) est la technique de mesure par effet Hall. Cette technique requiert une mise en forme préalable de l'échantillon, typiquement sous la forme d'un parallélépipède rectangle, ainsi que l'exposition de l'échantillon à un champ magnétique réversible. Elle est donc relativement complexe à mettre en oeuvre.

Enfin, l'article [« On the use of hopping conduction for the détermination of dopant concentration in compensated silicon » ; A. Fauveau et al., Phys. Status Solidi C, Volume 13, Issue 10-12, pp. 776-781, 2016] divulgue une méthode pour déterminer les concentrations en impuretés dopantes majoritaires et minoritaires d'un échantillon de silicium compensé. Cette méthode comprend une étape de mesure de la résistivité électrique $\rho(T)$ à des températures T allant de 15 K à 300 K et une étape de détermination de la température de transition entre le régime de conduction de bande et le régime de conduction par saut de porteurs, ou « hopping » en anglais. Une équation linéaire empirique permet ensuite de déterminer la concentration en impuretés dopantes majoritaires à partir de la température de transition. Enfin, la concentration en impuretés dopantes minoritaires est déterminée à partir d'une valeur de résistivité électrique mesurée à température ambiante, de la concentration en impuretés dopantes majoritaires et d'un modèle de mobilité des porteurs de charge majoritaires dans le silicium compensé.

Cette méthode est longue à mettre en oeuvre car un grand nombre de mesures de la résistivité est nécessaire (on ignore exactement où se situe la température de transition) et chaque mesure est précédée d'une phase de refroidissement. Elle requiert en outre de descendre très bas en température, jusqu'à 15 K environ, pour atteindre le régime de conduction par « hopping » et détecter la température de transition avec le régime de conduction de bande. Or atteindre des températures aussi faibles est long et coûteux.

## RÉSUMÉ DE L'INVENTION

L'invention a pour objectif de réduire le temps et les coûts nécessaires à la détermination des concentrations en impuretés dopantes majoritaires et minoritaires dans un échantillon en matériau semi-conducteur compensé, par exemple en silicium métallurgique ou en silicium recyclé.

Selon un premier aspect de l'invention, on tend vers cet objectif en prévoyant un procédé de détermination comprenant les étapes suivantes :

- mesurer des valeurs de résistivité électrique de l'échantillon à une première température et à une deuxième température, distincte de la première température, les première et deuxième températures appartenant à une plage de températures correspondant à un régime de gel des porteurs de charge ;
- déterminer un facteur pré-exponentiel d'une loi d'Arrhenius exprimant la résistivité électrique dans le régime de gel des porteurs de charge, à partir des valeurs de résistivité électrique mesurées aux première et deuxième températures ;
- déterminer un degré de compensation du matériau semi-conducteur à partir du facteur pré-exponentiel ;
- déterminer les concentrations en impuretés dopantes majoritaires et minoritaires à partir du degré de compensation et d'une valeur de référence de la résistivité électrique de l'échantillon.

Le procédé de détermination selon le premier aspect de l'invention est particulièrement rapide à mettre en oeuvre, car le nombre de mesures à basse température est limité (deux ou trois valeurs, selon le choix de la valeur de référence). En outre, ce procédé ne requiert pas d'atteindre des températures correspondant au régime de conduction par « hopping », en général inférieures à 20 K. Le temps et l'énergie nécessaires au refroidissement de l'échantillon restent par conséquent maitrisés.

Comparée aux techniques d'analyse chimique ou à la mesure de la concentration en porteurs de charge par effet Hall, la mesure de la résistivité électrique est simple à mettre en oeuvre. Elle peut être appliquée à des échantillons de géométries variées, tels que des cailloux, sans étape préparatoire de l'échantillon (du type dissolution du matériau ou mise en forme géométrique). De préférence, la résistivité électrique est mesurée par une technique de mesure sans contact, par exemple selon le principe des courants de Foucault.

Dans un mode de mise en oeuvre préférentiel du procédé, le degré de compensation C du matériau semi-conducteur est calculé à partir du facteur pré-exponentiel $\rho_1$ en utilisant une relation de la forme suivante :

$$C = \frac{10^{\frac{\log(\rho_1)-b}{a}}}{1 + 10^{\frac{\log(\rho_1)-b}{a}}}$$

où a et b sont des coefficients.

Les première et deuxième températures peuvent être comprises entre 20 K et 200 K, de préférence entre 40 K et 100 K.

La valeur de référence de la résistivité électrique est avantageusement une des valeurs de résistivité électrique mesurées aux première et deuxième températures.

Alternativement, la valeur de référence de la résistivité électrique est mesurée à une troisième température distincte des première et deuxième températures. La troisième température est avantageusement supérieure aux première et deuxième températures, de préférence égale à la température ambiante.

Un deuxième aspect de l'invention concerne un système de caractérisation permettant de déterminer les concentrations en impuretés dopantes majoritaires et minoritaires. Ce système comprend :

- un dispositif de refroidissement de l'échantillon capable d'atteindre une plage de températures correspondant à un régime de gel des porteurs de charge ;
- un dispositif de mesure capable de mesurer des valeurs de résistivité électrique de l'échantillon à des première et deuxième températures appartenant à ladite plage de températures ;
- un calculateur configuré pour :

  ○ déterminer un facteur pré-exponentiel d'une loi d'Arrhenius exprimant la résistivité électrique dans le régime de gel des porteurs de charge, à partir des valeurs de résistivité électrique mesurées aux première et deuxième températures ;
  ○ déterminer un degré de compensation du matériau semi-conducteur à partir du facteur pré-exponentiel ;
  ○ déterminer les concentrations en impuretés dopantes majoritaires et minoritaires à partir du degré de compensation et d'une valeur de référence de la résistivité électrique de l'échantillon.

**BRÈVE DESCRIPTION DES FIGURES**

D'autres caractéristiques et avantages de l'invention ressortiront clairement de la description qui en est donnée ci-dessous, à titre indicatif et nullement limitatif, en référence aux figures annexées, parmi lesquelles :

- la figure 1 représente la variation de la résistivité électrique $\rho$ d'un échantillon en matériau semi-conducteur compensé, en fonction de l'inverse de la température T de l'échantillon ;
- la figure 2 représente des mesures de résistivité $\rho$ de plusieurs échantillons en silicium compensé de type p en fonction de l'inverse de la température T, les échantillons ayant des degrés de compensation C différents ;
- la figure 3 représente des étapes S1 à S4 d'un procédé de détermination des concentrations en impuretés dopantes majoritaires et minoritaires, selon le premier aspect de l'invention ;
- la figure 4 représente une relation linéaire empirique permettant de déterminer le degré de compensation C à partir d'un facteur pré-exponentiel $\rho_1$ lors de l'étape S3 du procédé, dans le cas d'un échantillon en silicium compensé de type p ; et
- la figure 5 représente une relation linéaire empirique permettant de déterminer le degré de compensation C à partir d'un facteur pré-exponentiel $\rho_1$ lors de l'étape S3 du procédé, dans le cas d'un échantillon en silicium compensé de type n.

Pour plus de clarté, les éléments identiques ou similaires sont repérés par des signes de référence identiques sur l'ensemble des figures.

**DESCRIPTION DÉTAILLÉE D'AU MOINS UN MODE DE RÉALISATION**

On appelle ci-après « dopant » une espèce chimique présente dans le matériau semi-conducteur et qui introduit un niveau d'énergie superficiel dans la bande interdite du matériau semi-conducteur. Les dopants peuvent provenir d'une contamination du matériau semi-conducteur ou avoir été introduits intentionnellement dans le matériau afin de modifier ses propriétés de conduction électrique. Les impuretés dopantes désignent les atomes de ces éléments dopants ou des agglomérats d'atomes, tel que les donneurs thermiques (créés à partir de l'oxygène interstitiel).

Les impuretés dopantes peuvent être de type donneur ou de type accepteur, selon la nature des porteurs de charge qu'elles génèrent lorsqu'elles sont ionisées, respectivement des électrons ou des trous. Les donneurs thermiques sont des impuretés dopantes de type donneur (2 électrons générés par donneur thermique). De la même façon, on différenciera les dopants accepteurs (comme le bore et l'aluminium dans le silicium) des dopants donneurs (comme le phosphore dans le silicium).

Un matériau semi-conducteur comme le silicium est dit compensé en impuretés dopantes lorsqu'il contient les deux types d'impuretés dopantes. Lorsque les impuretés dopantes de type accepteur sont majoritaires et les impuretés dopantes de type donneur sont minoritaires, la conductivité du matériau est de type p. Inversement, lorsque les impuretés dopantes de type donneur sont majoritaires et les impuretés dopantes de type accepteur sont minoritaires, la conductivité du matériau est de type n.

Le degré de compensation C du matériau semi-conducteur est défini comme étant le rapport entre la concentration en porteurs de charge minoritaires (i.e. générés par les impuretés dopantes minoritaires, toutes espèces confondues) sur la concentration en porteurs de charge majoritaires (i.e. générés par les impuretés dopantes majoritaires, toutes espèces confondues). Dans le cas d'un matériau comprenant un dopant de chaque type, le degré de compensation C est égal à la concentration en impuretés dopantes minoritaires [min], pondérée par le nombre $c_i$ de charges générées par une impureté ionisée du dopant minoritaire, sur la concentration en impuretés dopantes majoritaires [Maj], pondérée par le nombre $c_2$ de charges générées par une impureté ionisée du dopant majoritaire, soit :

$$C = \frac{c_1 \times [min]}{c_2 \times [Maj]}$$

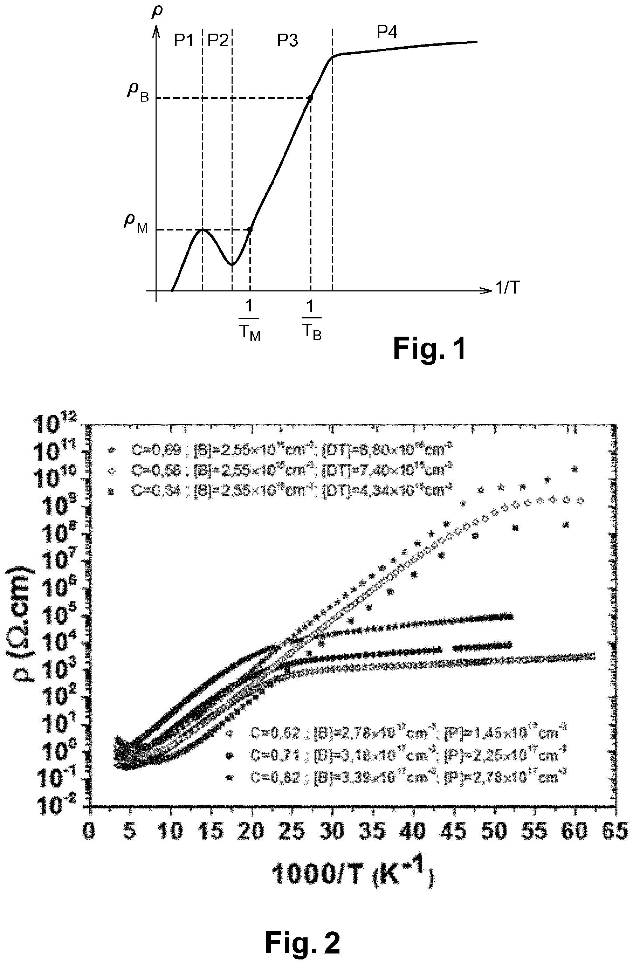

La figure 1 est un graphique représentant la résistivité électrique $\rho$ (en échelle logarithmique) d'un échantillon de matériau semi-conducteur compensé en impuretés dopantes, en fonction de l'inverse de la température de l'échantillon (1/T). Au fur et à mesure qu'on diminue la température T, les porteurs de charge majoritaires sont progressivement gelés et les impuretés dopantes majoritaires ionisées récupèrent les charges libérées à température ambiante. Il en résulte une augmentation de la résistivité $\rho$ plus on refroidit l'échantillon.

Le graphique de la figure 1 peut être divisé en quatre régions ou plages de températures, référencées de P1 à P4 et correspondant chacune à un régime de conduction particulier des porteurs de charge dans l'échantillon :

- la plage P1 des températures les plus élevées correspond au régime de conduction intrinsèque ;
- la plage P2 des températures intermédiaires correspond au régime de saturation, appelé également régime d'épuisement ;
- la plage P3 des basses températures correspond au régime de gel des porteurs de charge ;
- la plage P4 des températures les plus faibles (i.e. très basses températures) correspond au régime de conduction par saut de porteurs ou « hopping ».

Dans les plages P1 à P3, la conduction électrique dans le matériau est régit par le mécanisme de conduction de bande. Par contre, dans la plage P4 (régime de conduction par « hopping »), la conduction des électrons dans la bande de conduction ou des trous dans la bande de valence devient si improbable qu'elle laisse place à un autre mécanisme : le saut des porteurs de charge entre des états d'énergie localisés dans la bande interdite du matériau semi-conducteur. Les porteurs de charges « sautent » d'atome en atome parmi les impuretés dopantes ionisées. Ce mécanisme vient ainsi limiter l'augmentation (exponentielle) de la résistivité observée dans le régime de gel des porteurs (plage P3).

La variation de résistivité illustrée par la figure 1, en fonction de la température, peut être décrite analytiquement par l'équation suivante :

$$\rho^{-1}(T) = \rho_1^{-1} exp\left(-\frac{\varepsilon_1}{kT}\right) + \rho_3^{-1} exp\left(-\frac{\varepsilon_3}{kT}\right)$$

Le premier terme de cette équation, $\rho_1^{-1} exp\left(-\frac{\varepsilon_1}{kT}\right)$, représente le mécanisme de conduction de bande, et plus particulièrement le régime de gel des porteurs de charge. Le deuxième terme de l'équation représente le mécanisme de conduction par « hopping ». Chacun des deux mécanismes est ainsi décrit par une loi d'Arrhenius comprenant un facteur pré-exponentiel $\rho_i$ (ou constante d'Arrhenius) et une énergie d'activation $\varepsilon_i$ (avec i = 1 ou i = 3).

Des mesures de résistivité électrique en température $\rho(T)$ ont été effectuées sur plusieurs échantillons de silicium compensé ayant des degrés de compensation C différents. Les échantillons, tous de type p, comportent des atomes de bore comme impuretés dopantes majoritaires et, selon les échantillons, des atomes de phosphore ou des donneurs thermiques comme impuretés dopantes minoritaires.

La figure 2 représente les valeurs mesurées de résistivité (toujours en échelle logarithmique) en fonction de l'inverse de la température (ici 1000/T). Pour chaque échantillon, on voit clairement apparaître les régimes de gel des porteurs et de conduction par « hopping » décrits en relation avec la figure 1. Les courbes correspondant aux différents échantillons prennent chacune la forme d'une droite D dans le régime de gel des porteurs. Les droites D sont parallèles entre elles, car leur pente est fixée par l'énergie d'activation du dopant majoritaire, ici commun à tous les échantillons (bore). Les droites D n'ont par contre pas la même ordonnée à l'origine. Cette ordonnée à l'origine étant égal au facteur

pré-exponentiel $\rho_1$ de la loi d'Arrhenius $\rho_1 \cdot exp\left(\frac{\varepsilon_1}{kT}\right)$, il en découle que le facteur pré-exponentiel $\rho_1$ varie selon les échantillons, en fonction du degré de compensation C du silicium.

La dépendance entre le facteur pré-exponentiel $\rho_1$ et le degré de compensation C peut également être montrée de manière théorique, en faisant appel à la statistique de Fermi-Dirac. Celle-ci permet de décrire la variation de la concentration en porteurs de charge libres en fonction de la température dans le silicium. Dans un échantillon de silicium compensé de type p, la concentration po(T) en porteurs de charge libres (des trous) est donnée par l'expression suivante :

$$p_0(T) = -\frac{1}{2}\left(N_D + \frac{N_V}{4}e^{\left(-\frac{E_a}{kT}\right)}\right) + \frac{1}{2}\left[\left(N_D + \frac{N_V}{4}e^{\left(-\frac{E_a}{kT}\right)}\right)^2 + N_V(N_A - N_D)e^{\left(-\frac{E_a}{kT}\right)}\right]^{\frac{1}{2}}$$

où $E_a$ est l'énergie d'activation des impuretés dopantes de type accepteur, $N_A$ la concentration d'impuretés dopantes de type accepteur, $N_D$ la concentration d'impuretés dopantes de type donneur, Nv la densité d'états effective de la bande de valence, k la constante de Boltzmann et T la température.

Dans un échantillon de silicium compensé de type n, la concentration no(T) en porteurs de charge (des électrons) s'exprime de la façon suivante :

$$n_0(T) = -\frac{1}{2}\left(N_A + \frac{N_C}{2}e^{\left(-\frac{E_d}{kT}\right)}\right) + \frac{1}{2}\left[\left(N_A + \frac{N_C}{2}e^{\left(-\frac{E_d}{kT}\right)}\right)^2 + 2N_c e^{\left(-\frac{E_d}{kT}\right)}(N_D - N_A)\right]^{\frac{1}{2}}$$

avec $E_d$ est l'énergie d'activation des impuretés dopantes de type donneur et $N_C$ est la densité d'états effective de la bande de conduction.

Dans la plage de température P3 correspondant au régime de gel des porteurs, il peut être fait l'hypothèse suivante :

$$N_D \gg \frac{N_V}{4}e^{\left(-\frac{E_a}{kT}\right)}$$

d'où

$$p_0(T) = \frac{1}{4}N_V \frac{N_A - N_D}{N_D}e^{\left(-\frac{E_a}{kT}\right)}$$

Sachant que le degré de compensation C est égal à $N_D/N_A$ dans le cas d'un échantillon de type p, l'expression de la concentration en porteurs de charge libres $p_0(T)$ devient :

$$p_0(T) = \frac{1}{4}N_V \frac{1 - C}{C}e^{\left(-\frac{E_a}{kT}\right)}$$

En remplaçant la concentration po(T) par son expression dans la formule de la résistivité $\rho(T) = 1/(e \times p_0(T) \times \mu(T))$, on obtient :

$$\rho(T) = \frac{4}{e\mu N_v}\left(\frac{C}{1 - C}\right)e^{\left(\frac{E_a}{kT}\right)}$$

d'où l'expression du facteur pré-exponentiel $\rho_1$ :

$$\rho_1 = \rho(T = 0) = \frac{4}{e\mu N_v}\left(\frac{C}{1-C}\right) \qquad (1)$$

avec e la charge électrique élémentaire et $\mu$ la mobilité des porteurs de charge majoritaires dans le silicium compensé.

Une expression théorique du facteur pré-exponentiel $\rho_1$ en fonction du degré de compensation C a donc été établie dans le cas du silicium compensé de type p.

De la même façon, une expression théorique (1') similaire à l'expression (1) a pu être établie pour le silicium compensé de type n :

$$\rho_1 = \frac{4}{e\mu N_c}\left(\frac{C}{1-C}\right) \qquad (1')$$

D'après le modèle proposé par F. Schindler et al. dans l'article [« Towards a unified low-field model for carrier mobilities in crystalline silicon », Solar Energy Materials & Solar Cells, Vol. 131, pp. 92-99, 2014], la mobilité $\mu$ des expressions (1) et (1') peut être exprimée de la façon suivante :

$$\mu = \frac{\mu_{max} - \mu_{min}}{1 + \left(\frac{[Maj]}{N_{ref}}\right)^\alpha + \left(\frac{c_l - 1}{c_{l,ref}}\right)^{\beta_1}}$$

avec $c_{l,ref}$ = 24,82 $\pm$ 2, $\beta_1$ = 1,092 $\pm$ 0,03, $c_l = \frac{[Maj]+[min]}{n_0+p_0} = \frac{N_A+N_D}{n_0+p_0}$, et

dans le cas du type n : $\mu_{max}$ = 1414 $cm^2.V^{-1}.s^{-1}$, $\mu_{min}$ = 38,5 $cm^2.V^{-1}.s^{-1}$, [Maj] = $N_D$, $N_{ref}$ = 9,20 $\times$ $10^{16}$ $cm^{-3}$, $\alpha$ = 0,711; ou

dans le cas type p : $\mu_{max}$ = 470,5 $cm^2.V^{-1}.s^{-1}$, $\mu_{min}$ = 44,9 $cm^2. V^{-1}.s^{-1}$, [Maj] = $N_A$, $N_{ref}$ = 2,23 $\times$ $10^{17}$ $cm^{-3}$, $\alpha$ = 0,719.

Dans les expressions théoriques (1) et (1') ci-dessus, la mobilité des porteurs de charge $\mu$, la densité d'états effective de la bande de valence $N_V$ et la densité d'états effective de la bande de conduction $N_C$ dépendent normalement des concentrations en impuretés dopantes de type accepteur $N_A$ et de type donneur $N_D$, et donc du degré de compensation C. Cette dépendance est cependant faible comparée à celle représentée par le rapport C/(1-C). Elle peut donc être négligée. En effet, les densités $N_V$ et $N_C$ dépendent de la température T à la puissance 3/2, et en première approximation, la mobilité $\mu$ dépend de la température T à la puissance -3/2 d'après le modèle de Drude (B. Sapoval and C. Hermann, Physics of Semiconductors, Springer Science & Business Media, 2003).

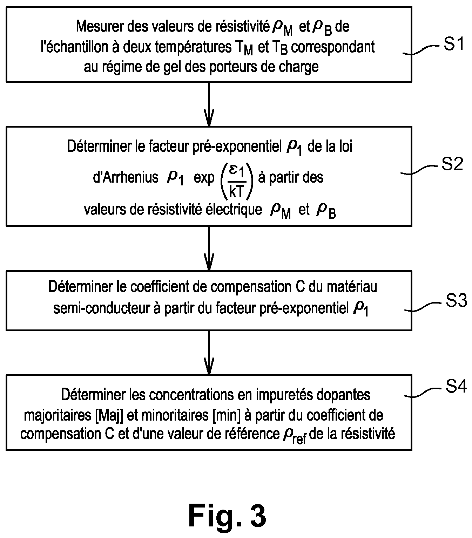

La figure 3 représente les étapes S1 à S4 d'un procédé qui exploite ces relations de dépendance entre le facteur pré-exponentiel $\rho_1$ et le degré de compensation C afin de déterminer les concentrations en impuretés dopantes majoritaires [Maj] et minoritaires [min] d'un échantillon en matériau semi-conducteur compensé. L'échantillon est par exemple en silicium, de préférence métallurgique ou issu d'un recyclage de plaquettes.

La première étape S1 consiste à mesurer au moins deux valeurs $\rho_M$ et $\rho_B$ de la résistivité électrique de l'échantillon, respectivement à des températures $T_M$ et $T_B$ appartenant à la plage de températures P3 (cf. Fig.1). A ces différentes températures de mesure (ici $T_M > T_B$), l'échantillon est dans le régime de gel des porteurs de charge.

La plage de températures P3 correspondant au régime de gel des porteurs varie en fonction de la nature des dopants, de leur concentration et du matériau semi-conducteur formant l'échantillon. La limite haute de cette plage, c'est-à-dire la température à laquelle on passe du régime de saturation au régime de gel des porteurs, augmente plus la concentration en impuretés dopantes majoritaires est élevée. En outre, elle augmente plus l'échantillon est compensé. Ceci est valable à la fois pour un échantillon de type n et pour un échantillon de type p.

La limite basse de la plage P3 correspond à la transition entre le régime de gel des porteurs et le régime de conduction par « hopping ». Elle varie également en fonction de la concentration en impuretés dopantes majoritaires et du degré de compensation C.

Pour un matériau et des conditions de dopage donnés, les limites haute et basse de la plage de températures P3 peuvent être déterminées expérimentalement en traçant le logarithme de la résistivité électrique en fonction de l'inverse de la température, et en observant à quelle température la courbe bascule d'un comportement hyperbolique à un comportement linéaire (pour la limite haute) et à quelle température ce comportement linéaire prend fin (pour la limite basse).

Les températures de mesure $T_M$ et $T_B$ sont typiquement comprises entre 20 K et 200 K et seront préférentiellement choisies entre 40 K et 100 K. On évite ainsi de descendre trop bas en température, ce qui réduit la durée et le coût de l'étape de mesure S1. En outre, dans cette gamme de températures, tous les échantillons entrent dans le régime de gel des porteurs de charge.

Différentes techniques peuvent être utilisées pour mesurer la résistivité électrique de l'échantillon. À titre d'exemple, on peut citer la méthode dite des quatre pointes, la méthode de Van der Pauw ou la méthode des courants de Foucault. La méthode des courants de Foucault est privilégiée car elle est sans contact et ne requiert aucune mise en forme de l'échantillon. L'étape de mesure S1 est alors particulièrement simple à mettre en oeuvre.

À l'étape S2, le facteur pré-exponentiel $\rho_1$ est déterminé à partir des valeurs de résistivité $\rho_M$ et $\rho_B$ mesurées à l'étape S1. Cette détermination peut être réalisée graphiquement, en traçant la droite passant par les points de coordonnées $\{1/T_B \; ; \log \rho_B\}$ et $\{1/T_M \; ; \log \rho_M\}$ puis en relevant l'ordonnée à l'origine de cette droite. Les températures de mesure $T_M$ et $T_B$ sont alors avantageusement séparées d'au moins 10 K afin de faciliter la détermination graphique.

Dans un mode de mise en oeuvre préférentiel de l'étape S2, le facteur pré-exponentiel $\rho_1$ est calculé en utilisant l'expression suivante :

$$\rho_1 = 10^{\left(\log \rho_M - \frac{\log \rho_B - \log \rho_M}{\frac{1}{T_B} - \frac{1}{T_M}} \times \frac{1}{T_M}\right)}$$

Le degré de compensation C de l'échantillon est ensuite déterminé lors de l'étape S3 à partir du facteur pré-exponentiel $\rho_1$.

Dans un mode de mise en oeuvre préférentiel de l'étape S3, le degré de compensation C est calculé en utilisant une relation empirique obtenue à partir de valeurs expérimentales du facteur pré-exponentiel $\rho_1$.

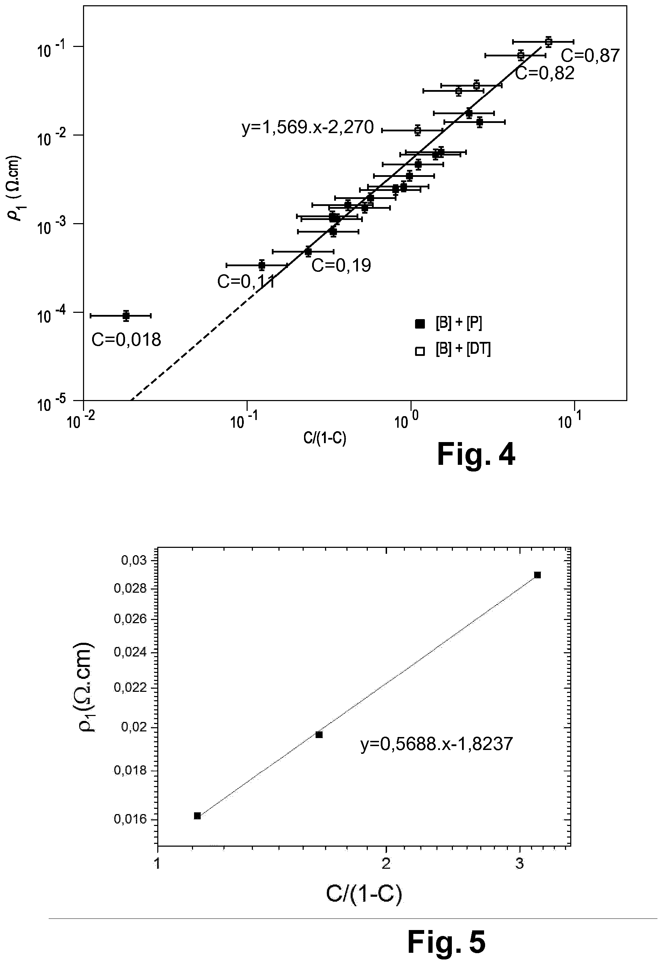

La figure 4 est un graphique qui représente des valeurs expérimentales du facteur pré-exponentiel $\rho_1$ en fonction du rapport C/(1-C). Ces valeurs expérimentales ont été déduites de mesures en température de la résistivité, parmi lesquelles figurent celles de la figure 2. Certaines valeurs correspondent à des échantillons de type p dont le dopage est composé d'atomes de bore et de phosphore, les autres valeurs à des échantillons dont le dopage est composé d'atomes de bore et de donneurs thermiques.

Quel que soit la nature des impuretés dopantes majoritaires et minoritaires, les valeurs du facteur pré-exponentiel $\rho_1$ pour lesquelles le degré de compensation C est supérieur à 0,1 forment une droite. Cette droite a pour équation :

$$\log \rho_1 = a \times \log \frac{C}{1 - C} + b$$

avec a et b deux constantes numériques valant respectivement 1,569 et -2,270.

Le degré de compensation C d'un échantillon de type p peut alors être calculé à partir du facteur pré-exponentiel $\rho_1$ en utilisant la relation empirique suivante :

$$C = \frac{10^{\frac{\log(\rho_1) - b}{a}}}{1 + 10^{\frac{\log(\rho_1) - b}{a}}} \qquad (2)$$

Les valeurs du facteur pré-exponentiel $\rho_1$ pour lesquelles le degré de compensation C est inférieur à 0,1 n'ont pas été prises en compte pour l'établissement de la relation (2) ci-dessus, dans la mesure où il n'est pas possible de s'assurer qu'elles ont été obtenues à des températures pour lesquelles l'expression théorique (1) est valable.

De la même façon, la figure 5 représente des valeurs expérimentales du facteur exponentiel $\rho_1$ obtenues pour des échantillons de silicium de type n ayant divers degrés de compensation C. Ces échantillons contiennent du phosphore comme dopant majoritaire et du bore comme dopant minoritaire. À l'instar du silicium de type p, les valeurs expérimentales pour le type n dessinent une droite lorsqu'elles sont représentées en fonction du rapport C/(1-C). Celle-ci a pour équation ;

$$\log \rho_1 = a' \times \log \frac{C}{1-C} + b'$$

avec a' et b' deux constantes numériques valant respectivement 0,5688 et -1,8237.

La relation empirique exprimant le degré de compensation C d'un échantillon de type n en fonction du facteur exponentiel $\rho_1$ est alors la suivante :

$$C = \frac{10^{\frac{\log(\rho_1)-b'}{a'}}}{1 + 10^{\frac{\log(\rho_1)-b'}{a'}}} \qquad (2')$$

Une relation empirique entre $\rho_1$ et C a donc été obtenue (par régression linéaire des valeurs expérimentales de $\rho_1$) pour chaque type de conductivité. À la différence des expressions théoriques (1) et (1'), les relations empiriques (2) et (2') ne reposent sur aucune hypothèse et ne sont donc pas approximées (i.e. les coefficients a, b, a' et b' tiennent compte de la dépendance entre la mobilité $\mu$ et les concentrations en impuretés dopantes d'une part, et de la dépendance entre les densités d'états Nv/Nc et les concentrations en impuretés dopantes d'autre part). Les relations (2) et (2') sont valables pour tous les échantillons en silicium de type p et type n respectivement, quel que soit la nature des dopants.

Dans une variante de mise en oeuvre de l'étape S3, les expressions théoriques (1) et (1') sont utilisées pour calculer le degré de compensation C à partir du facteur pré-exponentiel $\rho_1$ déterminé à l'étape S2.

Enfin, le procédé de la figure 3 comprend une étape S4 de détermination des concentrations en impuretés dopantes majoritaires [Maj] et minoritaires [min]. Cette dernière étape S4 consiste en la résolution d'un système de deux équations à deux inconnues. La première équation entre les concentrations inconnues [Maj] et [min] est donnée par la valeur du degré de compensé obtenue à l'étape S3 :

$$C = \frac{c_1 \times [min]}{c_2 \times [Maj]} \qquad (3)$$

avec $c_1$ et $c_2$ le nombres de charge libérées par les impuretés dopantes minoritaires et majoritaires respectivement (ex. 1 pour les atomes de bore, de phosphore et d'aluminium, 2 pour les donneurs thermiques).

La deuxième équation est donnée par une valeur de référence $\rho_{ref}$ de la résistivité électrique :

$$\rho_{ref} = \frac{1}{e \times p_0([Maj],[min]) \times \mu([Maj], E_{Maj})} \qquad (4)$$

avec $E_{Maj}$ le niveau d'énergie associé au dopant majoritaire.

La valeur de référence $\rho_{ref}$ de la résistivité est avantageusement l'une des deux valeurs $\rho_M$ et $\rho_B$ mesurées lors de l'étape S1, par exemple celle mesurée à la température $T_M(\rho_M)$. Une troisième mesure de la résistivité peut ainsi être évitée.

Pour obtenir davantage de précision sur le modèle de mobilité $\mu$ ([Maj], $E_{maj}$), la valeur de référence $\rho_{ref}$ peut alternativement être une troisième valeur de résistivité mesurée à une température différente des températures $T_M$ et $T_B$. Dans un souci de simplicité, cette troisième valeur de résistivité est avantageusement mesurée à une température supérieure aux températures $T_M$ et $T_B$, et de préférence à température ambiante (typiquement entre 290 K et 300 K).

Le niveau d'énergie $E_{Maj}$ associé au dopant majoritaire est fixe et connu pour la plupart des impuretés dopantes. Toutefois, au-dessus d'un certain seuil de concentration en dopants (en général $10^{17}$ cm$^{-3}$), ce niveau se décale vers la bande de valence (pour un dopant de type accepteur) ou vers la bande de conduction (pour un dopant de type donneur) du silicium. On ignore alors sa valeur exacte, ce qui rajoute une inconnue à l'étape S4 de résolution du système d'équations. Dans ce cas, le protocole suivant pourra être utilisé.

Dans un premier temps, les concentrations en impuretés dopantes majoritaires [Maj] et minoritaires [min] sont déterminées grâce au procédé de la figure 3, en utilisant à l'étape S4 la valeur du niveau d'énergie $E_{Maj}$ connue pour les faibles concentrations en dopants ($\leq 10^{17}$ cm$^{-3}$). Puis, à l'aide des concentrations [Maj] et [min], du niveau d'énergie $E_{Maj}$ choisi et du modèle de résistivité $\mu(T)$ sélectionné (par exemple celui de Schindler et al.), une valeur théorique de résistivité est calculée en utilisant l'expression de la résistivité (équation (3) ci-dessus). Cette valeur théorique est de préférence calculée à la température $T_B$ ou $T_M$ n'ayant pas été utilisée à l'étape S4, soit $T_B$ dans cet exemple. Puis, la valeur théorique de la résistivité est comparée à la valeur expérimentale obtenue à l'étape S1. Si la valeur théorique coïncide avec la valeur expérimentale, la valeur choisie du niveau d'énergie $E_{Maj}$ peut être considérée comme exacte. Si par contre la valeur théorique diffère de la valeur expérimentale, par exemple de plus de 5 %, la valeur du niveau d'énergie $E_{Maj}$ est modifiée et une nouvelle détermination des concentrations [Maj] et [min] est effectuée. On procédera ainsi par itération, par exemple au moyen d'un algorithme, jusqu'à trouver une valeur du niveau d'énergie faisant coïncider les valeurs théorique et expérimentale de la résistivité (à une même température).

Le procédé de la figure 3 permet de déterminer de façon fiable et précise les concentrations en impuretés dopantes majoritaires et minoritaires dans un échantillon de matériau semi-conducteur, par exemple en silicium, germanium ou un alliage de silicium-germanium. Il est rapide et économique à mettre en oeuvre car il ne requiert que deux mesures de résistivité à basse température. En effet, étant donné que la courbe $\log\rho = f(1/T)$ prend la forme d'une droite dans le régime de gel des porteurs, il suffit de deux valeurs de résistivité pour obtenir son ordonnée à l'origine : le facteur pré-exponentiel $\rho_1$.

Par ailleurs, contrairement au procédé de l'art antérieur, le procédé selon l'invention ne nécessite pas d'atteindre les très basses températures, aux alentours de 15 K. En conséquence, les valeurs de résistivité atteintes par l'échantillon sont moins élevées, typiquement inférieures à 100 Ω.cm, ce qui les rend plus facilement mesurables, notamment par les méthodes de mesure sans contact. Lorsqu'une telle méthode de mesure sans contact est employée à l'étape S1, le procédé est en outre applicable à toutes les formes d'échantillons, notamment à des morceaux de plaquettes ou des cailloux (autrement dit du matériau semi-conducteur à l'état de charge).

Les concentrations en impuretés dopantes constituent de précieuses informations pour optimiser les procédés de purification du matériau semi-conducteur, les procédés de tirage de lingots et, ultérieurement, les procédés de fabrication des dispositifs semiconducteurs. En particulier, la fabrication de cellules photovoltaïques à haut rendement en silicium métallurgique est facilitée, car il est désormais possible de contrôler efficacement leurs teneurs en dopants.

Un exemple de mise en oeuvre du procédé de détermination selon l'invention va maintenant être décrit. Dans cet exemple, on considère un échantillon de silicium monocristallin de type Czochralski dont le dopant majoritaire est le bore et le dopant minoritaire est le phosphore.

La résistivité électrique de cet échantillon est mesurée aux températures $T_B$ = 58,7 K, $T_M$ = 99,6 K et $T_{amb}$ = 293,8 K (étape S1) par la méthode sans contact des courants de Foucault. Les valeurs obtenues sont les suivantes :

$$\rho_M = \rho(T_M = 58,7\ K) = 57,5\ \Omega.\ cm$$
$$\rho_B = \rho(T_M = 99,6\ K) = 1,82\ \Omega.\ cm$$
$$\rho_{ref} = \rho(T_{amb} = 293,8\ K) = 0,329\ \Omega.\ cm$$

Le facteur pré-exponentiel $\rho_1$ est ensuite calculé à l'aide des valeurs de résistivité $\rho_M$ et $\rho_B$ (étape S2) :

$$\rho_1 = 0,0128\ \Omega.\ cm$$

Puis, la valeur correspondante du rapport C/(1-C) est calculée en utilisant la relation (2) (étape S3). On obtient :

$$\frac{C}{1-C} = 0,618$$

d'où :

$$C = 0,62$$

Enfin, les concentrations en impuretés dopantes majoritaires [Maj] et minoritaires [min] de l'échantillon sont obtenues en résolvant les équations (3) et (4) (étape S4) avec $\rho_{ref}$ = 0,329 Ω et C = 0,62 :

$$[Maj] = 2,6.\ 10^{17} cm^{-3}$$

[*min*] = 1,61. $10^{17} cm^{-3}$

À titre de comparaison, les concentrations en impuretés dopantes majoritaires [Maj] et minoritaires [min] de l'échantillon ont également mesurées à l'aide d'une technique classique d'analyse chimique. Les résultats obtenus sont :

[*Maj*] = 2,78. $10^{17} cm^{-3}$
[*min*] = 1,45. $10^{17} cm^{-3}$

Le procédé de détermination selon l'invention donne par conséquent des résultats satisfaisants en termes de précision.

Naturellement, le procédé selon l'invention n'est pas limité aux exemples de matériaux ou de dopants donnés ci-dessus. Il est également applicable à un matériau semi-conducteur comprenant plus d'un dopant accepteur et d'un dopant donneur. En présence de plusieurs dopants d'un même type qui libèrent le même nombre de charge ($c_1$ ou $c_2$), le procédé permet de déterminer les concentrations totales en impuretés dopantes majoritaires et minoritaires, toutes espèces confondues.

Les inventeurs ont également mis au point un système de caractérisation pour mesurer rapidement et simplement les concentrations en impuretés dopantes majoritaires [Maj] et minoritaires [min] d'un échantillon. Ce système comprend un dispositif de refroidissement capable d'amener l'échantillon à des températures correspondant au régime de gel des porteurs de charge, un dispositif de mesure de la résistivité électrique à ces températures et un calculateur programmé pour mettre en oeuvre les étapes S2 à S4 du procédé.

Le dispositif de refroidissement comporte par exemple une cuve, dans laquelle est placé l'échantillon. Cette cuve peut être refroidie soit par contact avec de l'hélium liquide (cas n° 1), soit par contact physique avec un dispositif extracteur de calories appelé « puits à froid » (cas n° 2). La cuve comporte une fenêtre transparente aux ondes électromagnétiques. L'épaisseur de cette fenêtre est la plus faible possible, de préférence inférieure à 0,5 mm et avantageusement inférieure à 0,1 mm. Pour une telle épaisseur de fenêtre, une calibration préalable du dispositif de mesure de la résistivité sur des échantillons de résistivité connue peut s'avérer nécessaire afin d'améliorer la précision des mesures.

Le système de caractérisation peut également comporter un capteur de température, afin de réguler la température de l'échantillon. Ce capteur est placé soit au contact direct de l'échantillon dans le premier cas, soit dans le dispositif extracteur de calories dans le deuxième cas.

Le dispositif de mesure de la résistivité comporte notamment une sonde de mesure, de préférence sans contact, par exemple une sonde à courant de Foucault. La sonde est avantageusement placée en vis-à-vis de l'échantillon de l'autre côté de la fenêtre. Le dispositif de mesure est relié à un ordinateur afin que les valeurs mesurées de résistivité puissent être traitées numériquement. De préférence, la sonde de mesure est placée dans une zone où la température est régulée, afin d'éviter que l'électronique de la sonde ne dérive.

Pour une meilleure précision des mesures de résistivité, l'échantillon comporte avantageusement une face plane disposée en regard de la sonde de mesure et dont les dimensions sont au moins égales au diamètre de la sonde.

Le calculateur est de préférence constitué par le microprocesseur de l'ordinateur. Celui-ci exécute des instructions stockées dans une mémoire non transitoire afin de réaliser les calculs des étapes S2 à S4. Une mémoire de l'ordinateur contient par exemple un tableur dans lequel sont consignées, au fil du temps, les valeurs de résistivité et de température mesurées par les différents capteurs du système. Ce tableur applique le traitement mathématique des étapes S2 à S4 à partir des données brutes de résistivité et de température.

**Revendications**

1. Procédé de détermination des concentrations en impuretés dopantes majoritaires et minoritaires ([Maj], [min]) dans un échantillon de matériau semi-conducteur compensé en impuretés dopantes, le procédé comprenant les étapes suivantes :

- mesurer (S1) des valeurs de résistivité électrique ($\rho_M$, $\rho_B$) de l'échantillon à une première température ($T_M$) et à une deuxième température ($T_B$), distincte de la première température, les première et deuxième températures ($T_M$, $T_B$) appartenant à une plage de températures (P3) correspondant à un régime de gel des porteurs de charge ;
- déterminer (S2) un facteur pré-exponentiel ($\rho_1$) d'une loi d'Arrhenius (p(T)) exprimant la résistivité électrique dans le régime de gel des porteurs de charge, à partir des valeurs de résistivité électrique ($\rho_M$, $\rho_B$) mesurées aux première et deuxième températures ($T_M$, $T_B$) ;
- déterminer (S3) un degré de compensation (C) du matériau semi-conducteur à partir du facteur pré-exponentiel

($\rho_1$) ;
- déterminer (S4) les concentrations en impuretés dopantes majoritaires et minoritaires ([Maj], [min]) à partir du degré de compensation (C) et d'une valeur de référence ($\rho_{ref}$) de la résistivité électrique de l'échantillon.

2. Procédé selon la revendication 1, dans lequel le degré de compensation C du matériau semi-conducteur est calculé à partir du facteur pré-exponentiel $\rho_1$ en utilisant une relation de la forme suivante :

$$C = \frac{10^{\frac{\log(\rho_1)-b}{a}}}{1 + 10^{\frac{\log(\rho_1)-b}{a}}}$$

où a et b sont des coefficients.

3. Procédé selon l'une des revendications 1 et 2, dans lequel les première et deuxième températures ($T_M$, $T_B$) sont comprises entre 20 K et 200 K, de préférence entre 40 K et 100 K.

4. Procédé selon l'une quelconque des revendications 1 à 3, dans lequel la valeur de référence ($\rho_{ref}$) de la résistivité électrique est une des valeurs de résistivité électrique ($\rho_M$, $\rho_B$) mesurées aux première et deuxième températures ($T_M$, $T_B$).

5. Procédé selon l'une quelconque des revendications 1 à 3, dans lequel la valeur de référence ($\rho_{ref}$) de la résistivité électrique est mesurée à une troisième température ($T_{amb}$) distincte des première et deuxième températures.

6. Procédé selon la revendication 5, dans lequel la troisième température ($T_{amb}$) est supérieure aux première et deuxième températures ($T_M$, $T_B$), de préférence égale à la température ambiante.

7. Procédé selon l'une quelconque des revendications 1 à 6, dans lequel la résistivité électrique est mesurée par une technique de mesure sans contact, par exemple selon le principe des courants de Foucault.

8. Système de caractérisation des concentrations en impuretés dopantes majoritaires et minoritaires ([Maj], [min]) dans un échantillon de matériau semi-conducteur compensé en impuretés dopantes, le système comprenant :

- un dispositif de refroidissement de l'échantillon capable d'atteindre une plage de températures (P3) correspondant à un régime de gel des porteurs de charge ;
- un dispositif de mesure capable de mesurer des valeurs de résistivité électrique ($\rho_M$, $\rho_B$) de l'échantillon à des première et deuxième températures ($T_M$, $T_B$) appartenant à ladite plage de températures ;
- un calculateur configuré pour :

∘ déterminer un facteur pré-exponentiel ($\rho_1$) d'une loi d'Arrhenius (p(T)) exprimant la résistivité électrique dans le régime de gel des porteurs de charge, à partir des valeurs de résistivité électrique ($\rho_M$, $\rho_B$) mesurées aux première et deuxième températures ($T_M$, $T_B$) ;
∘ déterminer un degré de compensation (C) du matériau semi-conducteur à partir du facteur pré-exponentiel ($\rho_1$) ;
∘ déterminer les concentrations en impuretés dopantes majoritaires et minoritaires ([Maj], [min]) à partir du degré de compensation (C) et d'une valeur de référence ($\rho_{ref}$) de la résistivité électrique de l'échantillon.

**Fig. 1**

**Fig. 2**

Mesurer des valeurs de résistivité $\rho_M$ et $\rho_B$ de l'échantillon à deux températures $T_M$ et $T_B$ correspondant au régime de gel des porteurs de charge — S1

Déterminer le facteur pré-exponentiel $\rho_1$ de la loi d'Arrhenius $\rho_1 \exp\left(\dfrac{\varepsilon_1}{kT}\right)$ à partir des valeurs de résistivité électrique $\rho_M$ et $\rho_B$ — S2

Déterminer le coefficient de compensation C du matériau semi-conducteur à partir du facteur pré-exponentiel $\rho_1$ — S3

Déterminer les concentrations en impuretés dopantes majoritaires [Maj] et minoritaires [min] à partir du coefficient de compensation C et d'une valeur de référence $\rho_{ref}$ de la résistivité — S4

# Fig. 3

**Fig. 4**

**Fig. 5**

Europäisches Patentamt

European Patent Office

Office européen des brevets

**RAPPORT DE RECHERCHE EUROPEENNE**

Numéro de la demande

EP 18 18 2608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Aurélie Fauveau ET AL: "On the use of hopping conduction for the determination of dopant concentration in compensated silicon : On the use of hopping conduction for the determination of dopant concentration in compensated silicon", Physica Status Solidi. C: Current Topics in Solid State Physics, vol. 13, no. 10-12, 11 juillet 2016 (2016-07-11), pages 776-781, XP055455626, DE ISSN: 1862-6351, DOI: 10.1002/pssc.201600048 * le document en entier * ----- | 1-8 | INV. G01N27/04 |
| A,D | FR 3 005 740 A1 (COMMISSARIAT ENERGIE ATOMIQUE [FR]) 21 novembre 2014 (2014-11-21) * le document en entier * ----- | 1-8 | |
| A,D | FR 3 031 185 A1 (COMMISSARIAT ENERGIE ATOMIQUE [FR]) 1 juillet 2016 (2016-07-01) * le document en entier * ----- | 1-8 | DOMAINES TECHNIQUES RECHERCHES (IPC) G01N |
| A | Bart J Van Zeghbroeck,: "Doped Semiconductors", , 1 janvier 1996 (1996-01-01), XP055455981, Extrait de l'Internet: URL:https://ecee.colorado.edu/~bart/book/extrinsi.htm [extrait le 2018-03-02] * le document en entier * ----- | 1-8 | |

Le présent rapport a été établi pour toutes les revendications

| Lieu de la recherche | Date d'achèvement de la recherche | Examinateur |
|---|---|---|
| Munich | 11 septembre 2018 | Klein, Marc-Oliver |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 18 2608

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-09-2018

| Document brevet cité au rapport de recherche | | Date de publication | Membre(s) de la famille de brevet(s) | | Date de publication |
|---|---|---|---|---|---|
| FR 3005740 | A1 | 21-11-2014 | EP | 2803985 A1 | 19-11-2014 |
| | | | ES | 2667400 T3 | 10-05-2018 |
| | | | FR | 3005740 A1 | 21-11-2014 |
| | | | US | 2014343870 A1 | 20-11-2014 |
| FR 3031185 | A1 | 01-07-2016 | EP | 3237895 A1 | 01-11-2017 |
| | | | FR | 3031185 A1 | 01-07-2016 |
| | | | TW | 201630094 A | 16-08-2016 |
| | | | WO | 2016102851 A1 | 30-06-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 3005740

- FR 3031185

**Littérature non-brevet citée dans la description**

- **A. FAUVEAU et al.** On the use of hopping conduction for the détermination of dopant concentration in compensated silicon. *Phys. Status Solidi C,* 2016, vol. 13 (10-12), 776-781

- **F. SCHINDLER et al.** Towards a unified low-field model for carrier mobilities in crystalline silicon. *Solar Energy Materials & Solar Cells,* 2014, vol. 131, 92-99
- **B. SAPOVAL ; C. HERMANN.** Physics of Semiconductors. Springer Science & Business Media, 2003